(19) Europäisches Patentamt
European Patent Office
Office européen des brevets

(11) **EP 3 437 736 A1**

(12) **EUROPEAN PATENT APPLICATION**
published in accordance with Art. 153(4) EPC

(43) Date of publication:
**06.02.2019 Bulletin 2019/06**

(51) Int Cl.:
**B01J 29/69** *(2006.01)* **B01D 53/94** *(2006.01)*
**F01N 3/08** *(2006.01)* **F01N 3/10** *(2006.01)*

(21) Application number: **17773995.0**

(22) Date of filing: **28.02.2017**

(86) International application number:
**PCT/JP2017/007597**

(87) International publication number:
**WO 2017/169450 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.03.2016 JP 2016072063**

(71) Applicant: **Hitachi Zosen Corporation**
**Osaka-shi, Osaka 559-8559 (JP)**

(72) Inventors:
• **YOSHIDA, Satoshi**
**Osaka-shi**
**Osaka 559-8559 (JP)**
• **HIKAZUDANI, Susumu**
**Osaka-shi**
**Osaka 559-8559 (JP)**
• **SHONO, Emi**
**Osaka-shi**
**Osaka 559-8559 (JP)**

(74) Representative: **Grünecker Patent- und**
**Rechtsanwälte**
**PartG mbB**
**Leopoldstraße 4**
**80802 München (DE)**

(54) **EXHAUST GAS CLEANING CATALYST**

(57)    Object and purpose are to provide an exhaust gas purification catalyst capable of efficiently removing a nitrogen oxide in a relatively low-temperature exhaust gas discharged from a marine diesel engine or the like using a reducing agent in a smaller amount than in the past. An exhaust gas purification catalyst is used in a combustion exhaust gas purification method for removing a nitrogen oxide in a combustion exhaust gas by reducing the nitrogen oxide to nitrogen, wherein an alcohol is added to the combustion exhaust gas as a reducing agent for reducing the nitrogen oxide, and is characterized in that the catalyst is composed of a support and a denitration catalytic metal supported on the support, and the support is a zeolite having a value (S) obtained by dividing a peak area (A) in an Al-OH spectrum measured with a Fourier transform infrared spectrometer (FT-IR) by a measurement support weight (W) of 1500 to 3500.

**EP 3 437 736 A1**

## Description

Technical Field

The present invention relates to an exhaust gas purification catalyst for removing a nitrogen oxide (NOx) in a combustion exhaust gas discharged from an engine which generates a combustion exhaust gas having a high sulfur oxide content at a relatively low temperature among internal combustion engines, for example, a marine diesel engine.

Background Art

Various internal combustion engines are driven by a natural source fuel such as petroleum, however, such a fuel contains a small amount of a nitrogen compound, and therefore, a combustion exhaust gas generated by combustion thereof contains a small amount of a nitrogen oxide. A nitrogen oxide present in such a combustion exhaust gas is harmful, and therefore, such a nitrogen oxide should be removed before it is released to the atmosphere. As one of the methods therefor, an ammonia selective catalytic reduction method is known as a mainstream method. This ammonia selective catalytic reduction method is a method using a denitration catalyst mainly composed of vanadium or titania as a catalyst and using ammonia as a reducing agent.

In a marine diesel engine or the like among various internal combustion engines, unlike the case of an automobile diesel engine, C-heavy oil or the like is burned. The C-heavy oil or the like has a high content of a sulfur compound other than a nitrogen compound, and therefore, when this oil is burned, in a combustion exhaust gas, a sulfur oxide is also generated at an unignorable content along with a nitrogen oxide.

In the case where such a combustion exhaust gas having also a high sulfur oxide content is tried to be denitrated using an ammonia selective catalytic reduction method as described above, a sulfur oxide present in the combustion exhaust gas and ammonia added as a reducing agent react with each other to generate ammonium sulfate $[(NH_4)_2SO_4]$. Then, in the marine diesel engine or the like, the temperature of the exhaust gas after passing through a supercharger becomes a low temperature of about 250°C or so, and therefore, there was a problem that the generated ammonium sulfate is deposited everywhere in an exhaust path, and for example, closure occurs in a heat exchanger provided in the exhaust path for cooling the exhaust gas.

Such a problem is caused by using ammonia as a reducing agent, and therefore, a combustion exhaust gas purification method using a reducing agent other than ammonia has been studied, and as such a combustion exhaust gas purification method, for example, there is a method described in Patent Literature 1.

In the method described in Patent Literature 1, an alcohol such as ethanol is used as a reducing agent, and a catalyst obtained by supporting a specific metal on a β-zeolite is used as a denitration catalyst.

Further, in Patent Literature 2, a denitration method in which an alcohol such as methanol is used as a reducing agent and a proton-type β-zeolite is used as a denitration catalyst is described.

Patent Literature 1: Japanese Unexamined Patent Application Publication No. 2004-358454
Patent Literature 2: Japanese Unexamined Patent Application Publication No. 2006-220107

Disclosure of Invention

Technical Problem

In the denitration method using a denitration catalyst described in Patent Literature 1, by using an alcohol as a reducing agent, a problem of generation of ammonium sulfate can be solved, however, a large amount of the reducing agent is needed, and therefore, a problem in which the cost increases cannot be avoided. Further, there was also a problem that a side reaction other than a desired denitration reaction also occurs, and due to a by-product formed by such a side reaction, so-called coke is deposited on the surface of the catalyst to deteriorate the denitration performance over time.

In the denitration method using the catalyst described in Patent Literature 2, with respect to the problem of deterioration of the catalyst over time as in Patent Literature 1, a denitration catalyst layer is placed in each of exhaust gas treatment channels branched to two systems, and while stopping the supply of the exhaust gas by closing one of the exhaust gas treatment channels and continuing the exhaust gas treatment in the other exhaust gas treatment channel, the denitration catalyst layer in the one of the exhaust gas treatment channels is treated by heating at 350 to 800°C, thereby restoring the deteriorated denitration performance, and this procedure is alternately repeated in the two systems.

However, also in the method described in Patent Literature 2, in the case where the amount of the reducing agent is large, in the same manner as in the method of Patent Literature 1, there was a problem that coke or the like is deposited on the catalyst with the elapse of time to deteriorate the denitration performance.

An object of the present invention is to solve the problems of the above-mentioned conventional techniques, and to provide an exhaust gas purification catalyst capable of efficiently removing a nitrogen oxide in a relatively low-temperature exhaust gas discharged from a marine diesel engine or the like using a reducing agent in a smaller amount than in the past.

Solution to Problem

The present inventors made intensive studies in view of the above circumstances, and as a result, they found that a catalyst including a zeolite having a value (S) obtained by dividing a peak area (A) in an Al-OH spectrum measured with a Fourier transform infrared spectrometer (FT-IR) by a measurement support weight (W) of 1500 to 3500 as a support has higher denitration performance than a conventionally known catalyst, and thus, completed the present invention.

That is, the present invention is an exhaust gas purification catalyst, which is used in a combustion exhaust gas purification method for removing a nitrogen oxide in a combustion exhaust gas by reducing the nitrogen oxide to nitrogen, wherein an alcohol is added to the combustion exhaust gas as a reducing agent for reducing the nitrogen oxide, and is characterized in that the catalyst is composed of a support and a denitration catalytic metal supported on the support, and the support is a zeolite having a value (S) obtained by dividing a peak area (A) in an Al-OH spectrum measured with a Fourier transform infrared spectrometer (FT-IR) by a measurement support weight (W) of 1500 to 3500.

It is preferred that the zeolite has an FER-type structure.

It is preferred that the denitration catalytic metal is Bi.

Advantageous Effects of Invention

An exhaust gas treatment catalyst according to the present invention is configured to use a zeolite having a value (S) obtained by dividing a peak area (A) in an Al-OH spectrum measured with a Fourier transform infrared spectrometer (FT-IR) by a measurement support weight (W) of 1500 to 3500 as a support, and by using such a catalyst, an alcohol as a reducing agent can be more effectively utilized, and as a result, a nitrogen oxide in a combustion exhaust gas can be more efficiently removed by the reducing agent in a smaller amount than in the past.

Brief Description of Drawings

FIG. 1 shows an example of an exhaust gas purification device (1) to which an exhaust gas purification catalyst according to the present invention is applied, and FIG. 1(a) is a perspective view, and FIG. 1(b) is a front view showing a honeycomb structure.

FIG. 2 shows a modification example of an exhaust gas treatment catalyst structure and is a perspective view showing a structure composed of a small piece of a corrugated substrate.

FIG. 3 is a flow sheet showing the outline of a testing device to be used in a catalyst performance test for catalysts of Examples.

FIG. 4 is a graph showing a relationship between a value (S) obtained by dividing a peak area (A) in an Al-OH spectrum measured with a Fourier transform infrared spectrometer (FT-IR) by a measurement support weight (W) and a denitration rate.

Description of Embodiment

Hereinafter, embodiments of the present invention will be described in detail.

The exhaust gas purification catalyst according to the present invention is used in a combustion exhaust gas purification method for removing a nitrogen oxide in a combustion exhaust gas by reducing the nitrogen oxide to nitrogen.

Here, when performing a combustion exhaust gas purification method, in the case where ammonia is added to a combustion exhaust gas as a reducing agent according to a conventional ammonia selective catalytic reduction method, the added ammonia and a sulfur oxide contained in the combustion exhaust gas react with each other to generate ammonium sulfate, and therefore, an improving method in which an alcohol is added in place of ammonia as a reducing agent has been proposed, and also in the application of the exhaust gas purification catalyst related to the present invention, an alcohol is added as a reducing agent.

The alcohol which is a reducing agent to be added is not particularly limited as long as it has a reducing ability at a temperature in a reduction treatment of the combustion exhaust gas, however, there is a problem that coke or the like is deposited on the catalyst to deteriorate the denitration performance, and therefore, it is preferred to use methanol, ethanol, or the like which is an alcohol having a small number of carbon atoms.

The present invention is an exhaust gas purification catalyst capable of improving the denitration performance in a low alcohol concentration range, and the concentration of the alcohol which is a reducing agent to be added is preferably from 1000 to 7000 ppm, preferably from 1000 to 6000 ppm.

Further, the exhaust gas purification catalyst according to the present invention is assumed to be applied in the case where the combustion exhaust gas temperature of a marine diesel, an oil burning boiler, a gas turbine, or the like is relatively low, and more specifically, the exhaust gas purification catalyst according to the present invention is used for removing a nitrogen oxide in a combustion exhaust gas at a temperature within a range of 180 to 400°C, preferably 200 to 300°C by reducing the nitrogen oxide to nitrogen.

The exhaust gas purification catalyst according to the present invention is composed of a support and a denitration catalytic metal supported on the support.

As the support to be used in the catalyst of the present invention, a zeolite having a value (S) obtained by dividing a peak area (A) in an Al-OH spectrum measured with a Fourier transform infrared spectrometer (FT-IR) by a measurement support weight (W) (hereinafter referred to as "value (S)" for the sake of simplicity) within a range of 1500 to 3500, preferably 1530 to 3260 is used.

The peak area (A) in an Al-OH spectrum is obtained by integrating a peak in an Al-OH spectrum measured with a Fourier transform infrared spectrometer (FT-IR). The peak area (A) indicates a portion surrounded by a straight line with which both ends of a peak are cut out. In this integration calculation, a calculation system attached to the Fourier transform infrared spectrometer (FT-IR) can be used.

Here, the "Al-OH" in the zeolite is generated by cutting a part of "-O-Al-O-" in the basic skeleton.

The measurement support weight (W) is the weight of a measurement sample to be measured with the Fourier transform infrared spectrometer (FT-IR), and is determined by, for example, measuring the weight of a support in the form of a pellet obtained by placing only a sample powder in a mold and applying a pressure thereto, thereby molding the powder into a pellet.

By using a zeolite having the above-mentioned value (S) of 1500 to 3500 as a support, the amount of Al-OH in the zeolite framework becomes an appropriate amount, and the ratio (selectivity) at which the alcohol serving as a reducing agent reaches the catalytic metal is improved, and as a result, the denitration rate is improved. On the other hand, when a zeolite having a value (S) smaller than 1500 is used, the acid centers are decreased and the alcohol selectivity of the reducing agent becomes favorable, however, the reactivity itself is lowered, and therefore, the denitration rate is considered to be decreased. On the other hand, when a zeolite having a value (S) larger than 3500 is used, the acid centers (number) become excessive, and the alcohol is wasted, and therefore, the denitration rate is considered to be decreased.

Incidentally, in the range of the Al-OH spectrum measured with the Fourier transform infrared spectrometer (FT-IR), a peak intensity of water contained on the surface of the zeolite also appears, and therefore, it is preferred to perform calcination heating (for example, vacuum heating) for the zeolite before measurement, thereby removing water contained on the surface of the zeolite.

The reason why the value (S) is used is that the effect of the thickness of the measurement support (pellet) which varies among samples to be measured with the Fourier transform infrared spectrometer (FT-IR) is compensated.

The zeolite to be used as the support is not particularly limited as long as it has a value (S) within a range as described above and can exhibit denitration performance. However, when a zeolite having a structure with a high acid strength is used as in the case of an MOR-type zeolite, a large amount of a reducing agent is needed. Further, in order for the denitration performance to be exhibited even in a low temperature range around 200°C, when using a zeolite having a weak acid strength such as a β-type zeolite or a Y-type zeolite, a reducing agent is less likely to react, and therefore, it is preferred to use an MFI-type zeolite having a structure with a relatively weaker acid strength than an MOR-type and with a stronger acid strength than a β-type zeolite or a Y-type zeolite. It is particularly preferred to use an FER-type zeolite.

The zeolite to be used as the support of the catalyst according to the present invention has a property that the value (S) is within a range of 1500 to 3500. The zeolite having such a property is obtained by performing a treatment of calcinating a zeolite in an atmosphere of an inert gas such as nitrogen until the amount of Al-OH in the zeolite framework represented by the value (S) obtained by measurement with the Fourier transform infrared spectrometer (FT-IR) becomes an appropriate amount. The calcination conditions at this time are specifically as follows: a zeolite powder is pulverized, and packed in a reactor, and thereafter fired in an inert atmosphere at a predetermined temperature for a predetermined time. For example, it is preferred to perform calcination of a commercially available zeolite at 500 to 800°C for about 12 to 36 hours.

The denitration catalytic metal to be supported on the support is not particularly limited as long as it can exhibit denitration performance, however, for example, at least one type selected from Co, Bi, Ag, and Pb is exemplified. A particularly preferred metal among these is Bi.

The exhaust gas purification catalyst according to the present invention is prepared by supporting the above-mentioned catalytic metal on the support. As a precursor compound of the catalytic metal at this time, an inorganic acid salt (for example, a nitrate or a chloride) or an organic acid salt (for example, an acetate) can be used.

The supporting of the catalytic metal on a specific zeolite which is the support is performed by ion exchange, and as a method therefor, for example, a method in which the catalytic metal is dissolved in a predetermined solvent, zeolite particles having the above-mentioned property are added thereto to form a slurry, and this slurry is stirred in a heated state, and thereafter cooled to room temperature is exemplified. By such a method, the exhaust gas purification catalyst in which the catalytic metal supported on the zeolite can be obtained.

The solvent to be used in the preparation of such a catalyst is preferably a solvent capable of uniformly dissolving the catalytic metal. In the case where bismuth nitrate is used as the precursor compound of the catalytic metal, ethylene glycol, acetic acid, dilute nitric acid, 2-methoxyethanol, or the like is exemplified as a preferred solvent. Further, in the case where bismuth nitrate is used as the precursor compound of the catalytic metal and water is used as the solvent, this compound is slightly soluble in water and therefore is suspended in water, however, it is possible to support the catalytic metal on the zeolite.

(Form of Exhaust Gas Purification Catalyst According to the Present Invention)

The exhaust gas purification catalyst according to the present invention may have any form as long as it can reduce a nitrogen oxide in a combustion exhaust gas to nitrogen by coming into contact with the nitrogen oxide, and examples thereof include a particulate form, a pellet form, a honeycomb form, a corrugated small piece form, a plate form, and the like, and the form can be arbitrarily selected according to a reactor to be applied or gas flow conditions.

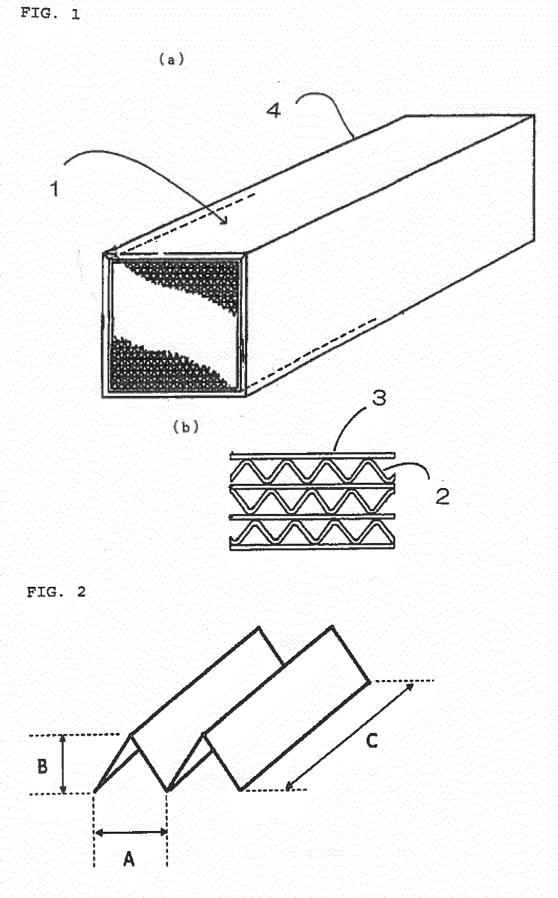

FIG. 1 shows an example of an exhaust gas purification device (1) to which the exhaust gas purification catalyst according to the present invention is applied, and a corrugated substrate (2) and a flat plate-shaped substrate (3) are alternately stacked and packed in a casing (4) in such a state, whereby the catalyst has a honeycomb form.

Here, a structure in a honeycomb (beehive) form generally refers to a structure which is divided by partitions and is composed of a plurality of through-holes (cells) through which an exhaust gas can flow and the partitions. The shape of the cross section of the through-hole (the shape of the cross section of the cell) is not particularly limited, and for example, a circular shape, an arcuate shape, a square shape, a rectangular shape, and a hexagonal shape are exemplified.

The corrugated substrate (2) and the flat plate-shaped substrate (3) are alternately stacked and adhered to each other in portions in contact with each other so as to be formed into an integrated structure, whereby a honeycomb structure may be formed. Alternatively, the corrugated substrate (2) and the flat plate-shaped substrate (3) are put into a state where they are alternately stacked without being adhered to each other, and packed in the casing (4) as shown in the above-mentioned FIG. 1, whereby the corrugated substrate (2) and the flat plate-shaped substrate (3) may be fixed so as not to be separated from each other. Therefore, as shown in FIG. 1, a structure composed of an object obtained by stacking the corrugated substrate (2) and the flat plate-shaped substrate (3) and the casing (4) surrounding the circumference of the object and fixing the object forms a honeycomb structure.

The honeycomb structure as shown in FIG. 1 is advantageous in that an operation can be easily performed in separate substrate units as compared with the case where the substrates are integrated by being adhered to each other when a catalyst is supported on the respective substrates constituting the honeycomb structure or the substrates before molding, when an operation of packing the substrates in the casing (4) is performed, when the substrates are replaced or the catalyst is reactivated due to the elapse of the operation time, and so on, and the configuration as shown in FIG. 1 is preferred from this point of view.

In the exhaust gas purification device (1) shown in FIG. 1, the casing (4) may be any as long as it maintains the corrugated substrate (2) and the flat plate-shaped substrate (3) in a state where they are alternately stacked, and opens at both ends for passing a combustion exhaust gas to be treated therethrough, and the cross-sectional structure thereof may have any shape. In consideration that the above-mentioned respective substrates can be easily packed with no space, the casing preferably has a square or oblong rectangular cross-sectional structure, that is, a rectangular cylindrical shape

The casing (4) having a rectangular cylindrical shape as described above may have a one-part structure or may have a two-part structure in which two parts are combined.

In the case where the casing (4) has a one-part structure, the corrugated and flat plate-shaped substrates (2) and (3) are packed in the casing (4) by being pushed thereinto from either open end in a state where these are stacked on each other.

In the case where the casing (4) has a two-part structure, an object in a state where the corrugated and flat plate-shaped substrates (2) and (3) are stacked in a honeycomb structure is placed on a bottom portion of one of the structures to become the casing (4), and thereafter, the other structure may be connected thereto, and therefore, an operation of packing the respective substrates in the casing (4) becomes easier.

As such a two-part casing, there are various forms. For example, a casing composed of a portion formed of three sides: the bottom side and both right and left sides in a rectangular form in cross section, that is, a casing main body having a substantially U-shape in cross section, and a flat plate-shaped lid body constituting the upper side and covering an opening portion of the casing main body is exemplified.

Further, it may be a casing composed of a portion formed of two sides: the bottom side and the left side in a rectangular form in cross section, that is, a casing main body having a substantially L-shape in cross section, and a lid body having a substantially reverse L-shape in cross section which can be fitted thereto.

In the exhaust gas purification device (1) using the exhaust gas purification catalyst according to the present invention, it is preferred that an inorganic fiber blanket is laid on the inner surface of the casing (4). By laying such an inorganic fiber blanket on the inner surface, measures for vibration can be taken by a frictional force generated between the flat plate-shaped or corrugated substrate and the inorganic fiber blanket on the inner surface of the casing (4).

The substrate may be made of any material as long as it can be molded into a corrugated shape or the like. A glass paper or a ceramic paper is exemplified as a preferred material in consideration of ease of molding or the like. As the glass paper, a commercially available nonwoven fabric glass paper can be used. Regarding this point, a general glass paper is difficult to mold as it is because of containing an organic binder, however, this disadvantage can be compensated by adding a step of supporting an inorganic binder to a molding step.

The thickness of the glass paper is preferably from 0.3 to 1.5 mm, more preferably from 0.5 to 1.2 mm from the viewpoint that it can be easily molded and also can have a necessary strength.

When the exhaust gas purification catalyst for reducing and removing a nitrogen oxide (NOx) is supported on the above-mentioned glass paper, an inorganic binder is supported thereon along with such an exhaust gas purification catalyst. This inorganic binder functions for supporting the exhaust gas purification catalyst on the glass paper, and also is used for maintaining the shape of the glass paper and imparting curability.

As the inorganic binder, at least one type selected from zirconia, alumina, silica, silica-alumina, and titania can be exemplified as a preferred one. The inorganic binder is particularly preferably zirconia or alumina.

For example, in the case where silica is used as the inorganic binder, a silica sol is used as a starting material. As such a silica sol, a material of acidic type (a neutral type or a basic type can also be used) containing silica in an amount of about 20 wt% can be used. Further, the weight ratio of the zeolite, water, and the silica sol as the inorganic binder is, for example, 100:75:46, and a slurry is prepared by mixing and stirring these members.

In the case where the exhaust gas purification catalyst and the inorganic binder are supported on the glass paper which is the substrate with such a slurry, a dipping method or a coating method is generally applied.

The dipping method is performed by dipping the glass paper which is the substrate in the above-mentioned slurry for a predetermined time, and thereafter, the glass paper is pulled up, and then, drying and calcination are sequentially performed.

In the coating method, first, the above-mentioned slurry is coated on the glass paper. When coating is performed, a conventionally known arbitrary method may be used. For example, a so-called soaking method, a brush coating method, a spray coating method, a drop coating method, and the like are exemplified. After coating on the glass paper is performed, calcination is performed.

Further, as an example of the structure to which the exhaust gas treatment catalyst according to the present invention is applied, other than a honeycomb structure composed of a combination of two types of substrates having the exhaust gas treatment catalyst according to the present invention supported thereon as described above, as shown in FIG. 2, a structure composed of a small piece of such a corrugated substrate may be adopted.

In the case where a small piece of such a substrate is assumed to have a corrugated shape in which a recessed groove is repeated once or more times, the width dimension per recessed groove (represented by A), the number of repetitions in the width direction (represented by n), the height dimension (represented by B), and the depth (represented by C) all have a small value. The width dimension (A) is, for example, from 2.0 to 100 mm. The height dimension (B) is, for example, from 1.0 to 50 mm. The depth dimension (C) is, for example, from 3.0 to 200 mm. The number of repetitions in the width direction (n) is, for example, 1 to 10.

(Examples)

Hereinafter, the exhaust gas treatment catalyst according to the present invention will be specifically described using Examples, and Comparative Example for comparison with Examples will also be shown, however, the present invention is not limited to those shown in Examples.

(Preparation of Catalyst Support)

The exhaust gas treatment catalyst according to the present invention is characterized in that a support having a specific property with respect to Al-OH is used. As the support of each of the exhaust gas treatment catalysts of the following Examples 1 to 4, a zeolite which is derived from an FER-type zeolite, and has a value (S) obtained by dividing a peak area (A) in an Al-OH spectrum measured with a Fourier transform infrared spectrometer (FT-IR) by a measurement support weight (W) of 1500 to 3500 was used.

The zeolite after the above-mentioned treatment was molded into a pellet using a given jig, and the pellet was used as a sample and subjected to vacuum heating at 450°C over 3 hours to remove moisture contained on the surface of the zeolite, and then was subjected to FT-IR measurement.

The FT-IR measurement was performed within a range of 1000 to 4000 cm$^{-1}$ by a transmission method, and a peak appearing within a range of 3500 to 3700 cm$^{-1}$ was used as an Al-OH peak.

The support of the exhaust gas treatment catalyst of Comparative Example 1 had a value (S) by the above-mentioned FT-IR measurement of 1242, which is a smaller value than 1500.

(Preparation of Exhaust Gas Treatment Catalyst)

(Example 1)

An FER-type zeolite (manufactured by Tosoh Corporation) having a value (S) of 1528 was used.

To 40 g of ion exchanged water, 1.45 g of bismuth nitrate hexahydrate was added to form a suspension, and this suspension was heated to 80°C. In the suspension maintained at this temperature, 10 g of the above-mentioned zeolite was dipped over 15 hours, thereby performing ion exchange. After ion exchange, the zeolite was taken out from an aqueous solution, and washed with 440 mL of ion exchanged water, and then, dried at 80°C over 12 hours, whereby an objective catalyst was obtained.

(Example 2)

A catalyst including an FER-type zeolite (manufactured by Tosoh Corporation) having a value (S) of 1766 as the support was prepared. The preparation procedure therefor was the same as in Example 1 except that the zeolite was changed.

(Example 3)

A catalyst including an FER-type zeolite (manufactured by Tosoh Corporation) having a value (S) of 2323 as the support was prepared. The procedure therefor was the same as in Example 1 except that the zeolite was changed.

(Example 4)

A catalyst including an FER-type zeolite (manufactured by Tosoh Corporation) having a value (S) of 3265 as the support was prepared. The procedure therefor was the same as in Example 1 except that the zeolite was changed.

(Comparative Example 1)

A catalyst including an FER-type zeolite (manufactured by Tosoh Corporation) having a value (S) of 1242 as the support was prepared. The procedure therefor was the same as in Example 1 except that the zeolite was changed.

(Catalyst Performance Test)

A catalyst performance test was performed for each of the catalysts of Examples 1 to 4 and Comparative Example 1 described above. Each of the catalysts of Examples 1 to 4 and Comparative Example 1 described above was press-molded, and thereafter, the molded material was pulverized and sized to a mesh size of 26 to 16.

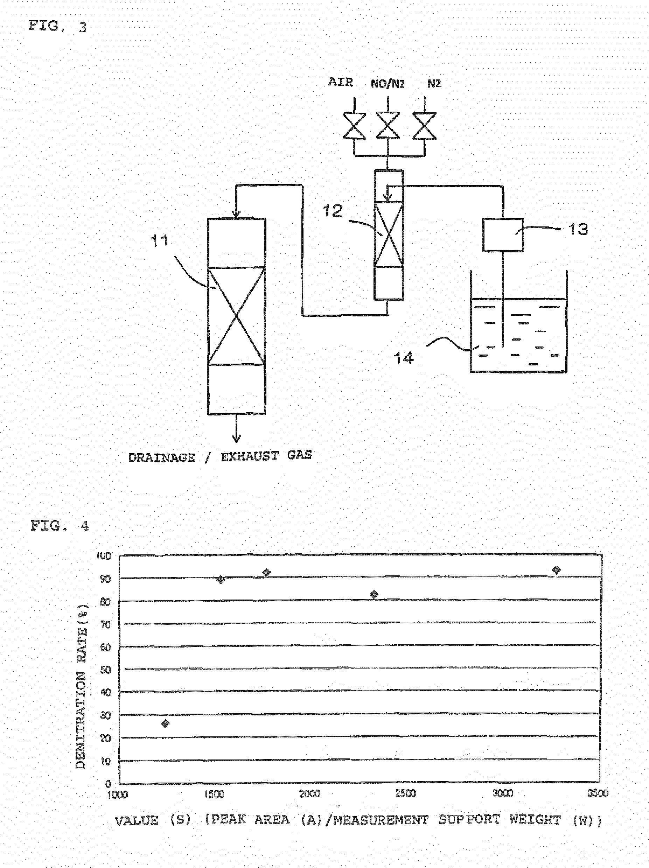

In FIG. 3, the outline of a testing device to be used in the catalyst performance test is shown.

The particulate catalyst obtained as described above was packed in a denitration reactor (11).

In the denitration reactor (11) packed with the above-mentioned catalyst, a gas for a test, the details of which are shown in the following Table 1, is introduced from the upper part thereof, and a gas after completion of a treatment with the exhaust gas treatment catalyst is discharged from the lower part thereof.

The gas for the test to be introduced into the denitration reactor (11) is prepared by mixing air and N$_2$ gas and NO gas in nitrogen. Each of the lines for supplying these gasses is provided with a valve, and by adjusting the openings of the valves, respectively, the flow rates of the respective gasses and the mixing ratio thereof are adjusted.

The gas after mixing is introduced into the upper portion of an evaporator (12). To this evaporator (12), water containing a predetermined amount of a reducing agent is supplied through a different route. That is, water containing methanol which is a reducing agent at a predetermined concentration is pumped up from a water tank (14) by a pump (13) and supplied to the upper part of the evaporator (12).

The above-mentioned mixed gas and methanol-containing water are heated in the evaporator (12), and water and methanol are evaporated and supplied to the denitration reactor (11).

The treated gas discharged from the denitration reactor (11) was subjected to a gas analysis.

The testing conditions when performing the test using the testing device shown in FIG. 3 are summarized in the following Table 1

Table 1 Testing Conditions

| Gas composition | |
|---|---|
| NO | 1000 ppm |
| Moisture | 5 vol% |
| $O_2$ | 14% |
| $N_2$ | Balance |
| Gas flow rate | 1,000 mL/min |
| Amount of catalyst | 2.0 q |
| Space velocity (SV) | 30000 |
| Gas temperature | 250°C |
| Methanol/NOx molar ratio | 2.2 |

The "balance" in Table 1 indicates that $N_2$ is added so that the gas composition becomes 100% in total.

In the above-mentioned Table 1, the space velocity (SV) is a value obtained by dividing the amount ($m^3$/h) of a gas to be treated flowing in the denitration reactor (11) by the volume ($m^3$) occupied by the denitration reactor (11) in which the catalyst is placed, and the larger the value, the more the contacting efficiency with the catalyst is favorable.

Incidentally, in the gas analysis at the outlet of the reactor, the NOx concentration at the outlet was measured using a nitrogen oxide (NOx) meter. From the measured value with the NOx meter, the denitration rate which is the NOx removal performance of the catalyst was calculated according to the following numerical formula (1).

$$\text{denitration rate (\%)} = (\text{NOxin} - \text{NOxout}) / \text{NOxin} \times 100 \quad (1)$$

The results are shown in the following Table 2 and FIG. 4.

Table 2 Relationship between S calculated from FT-IR Measurement and Denitration Rate

| | S | Denitration rate [%] |
|---|---|---|
| Comparative Example 1 | 1242 | 26 |
| Example 1 | 1528 | 89 |
| Example 2 | 1766 | 92 |
| Example 3 | 2323 | 93 |
| Example 4 | 3265 | 82 |

As shown in Table 2, by using the exhaust gas treatment catalysts including a zeolite having a value (S) of 1500 to 3500 as the support, high denitration rates of 89%, 92%, 93%, and 82% were obtained, respectively. On the other hand, in Comparative Example 1, the denitration rate was the order of 26%, and a large difference in denitration rate was confirmed as compared with Examples 1 to 4.

Incidentally, in the present Examples, an FER-type zeolite having a value (S) within an appropriate range was used, however, it can also be obtained by performing a treatment of calcinating a zeolite in an atmosphere of an inert gas such as nitrogen until the amount of Al-OH in a zeolite framework becomes an appropriate amount.

Explanations of Reference numerals

1:   exhaust gas purification device
2:   corrugated substrate
3:   flat plate-shaped substrate
4:   casing

**Claims**

1.   An exhaust gas purification catalyst, which is used in a combustion exhaust gas purification method for removing a nitrogen oxide in a combustion exhaust gas by reducing the nitrogen oxide to nitrogen, wherein an alcohol is added to the combustion exhaust gas as a reducing agent for reducing the nitrogen oxide, **characterized in that** the catalyst is composed of a support and a denitration catalytic metal supported on the support, and the support is a zeolite having a value (S) obtained by dividing a peak area (A) in an Al-OH spectrum measured with a Fourier transform infrared spectrometer (FT-IR) by a measurement support weight (W) of 1500 to 3500.

2.   The exhaust gas purification catalyst according to claim 1, wherein the zeolite has an FER-type structure.

3.   The exhaust gas purification catalyst according to claim 1 or 2, wherein the denitration catalytic metal is Bi.

FIG. 1

(a)

4

1

(b)

3

2

FIG. 2

B

A

C

FIG. 3

FIG. 4

## INTERNATIONAL SEARCH REPORT

| International application No. |
| --- |
| PCT/JP2017/007597 |

A. CLASSIFICATION OF SUBJECT MATTER
*B01J29/69*(2006.01)i, *B01D53/94*(2006.01)i, *F01N3/08*(2006.01)i, *F01N3/10* (2006.01)i

According to International Patent Classification (IPC) or to both national classification and IPC

B. FIELDS SEARCHED

Minimum documentation searched (classification system followed by classification symbols)
B01J29/69, B01D53/94, F01N3/08, F01N3/10

Documentation searched other than minimum documentation to the extent that such documents are included in the fields searched
Jitsuyo Shinan Koho         1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)
DWPI(Thomson Innovation)

C. DOCUMENTS CONSIDERED TO BE RELEVANT

| Category* | Citation of document, with indication, where appropriate, of the relevant passages | Relevant to claim No. |
| --- | --- | --- |
| X | WO 2015/147257 A1  (Hitachi Zosen Corp.),<br>01 October 2015 (01.10.2015),<br>claims; examples<br>& EP 3124115 A1<br>claims; examples<br>& CN 106132540 A         & KR 10-2016-0140610 A | 1-3 |
| X | WO 2015/119069 A1  (Hitachi Zosen Corp.),<br>13 August 2015 (13.08.2015),<br>claims; examples<br>& EP 3103550 A1<br>claims; examples<br>& KR 10-2016-0119061 A   & CN 106413888 A | 1-3 |

☐ Further documents are listed in the continuation of Box C.   ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered  to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 22 May 2017 (22.05.17) | 30 May 2017 (30.05.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

**EP 3 437 736 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004358454 A

- JP 2006220107 A